# FASCICULE DE BREVET EUROPEEN

(11) **EP 2 209 990 B1**
(45) Date de publication et mention de la délivrance du brevet: **05.12.2018**
(21) Numéro de dépôt: 08844085.4
(22) Date de dépôt: 23.10.2008
(51) Int. Cl.: F03B 17/06

(54) **TURBOMACHINE A TURBINES HYDRAULIQUES A FLUX TRANSVERSE A FORCE GLOBALE DE PORTANCE REDUITE**
TURBOMOTOR MIT HYDRAULISCHEN QUERSTROMTURBINEN MIT REDUZIERTER GESAMTAUFTRIEBSKRAFT
TURBINE ENGINE WITH TRANSVERSE-FLOW HYDRAULIC TURBINES HAVING REDUCED TOTAL LIFT FORCE

(30) Priorité: 23.10.2007 FR 0758511
(43) Date de publication de la demande: 28.07.2010
(73) Titulaire: Institut National Polytechnique de Grenoble, 38031 Grenoble Cedex 1 (FR); Electricité de France, 75008 Paris (FR)
(72) Inventeur: ACHARD, Jean-Luc, F-38100 Grenoble (FR); IMBAULT, Didier, F-38240 Meylan (FR); TOURABI, Ali, F-38320 Eybens (FR)
(74) Mandataire: Cabinet Beaumont
(86) Numéro de dépôt international: PCT/FR2008/051917
(87) Numéro de publication internationale: WO 2009/056742

(56) Documents cités:
- WO-A-2007/009155
- WO-A-2007/027113
- CA-A1- 2 484 293
- FR-A- 506 199
- FR-A- 2 865 777
- US-A- 950 676
- US-A- 4 203 702

## Description

### Domaine de l'invention

La présente invention concerne une turbomachine hydraulique, et en particulier, une turbomachine hydraulique pour la récupération et la conversion d'énergie cinétique de courants marins ou fluviaux, notamment pour la fourniture d'électricité.

### Exposé de l'art antérieur

Parmi les sources d'énergie naturelles non polluantes, une source d'énergie actuellement peu exploitée correspond aux courants d'eau naturellement présents sur la planète : courants de pleine mer, courants de marée, courants de détroit et d'estuaire, courants de fleuve ou de rivière. En effet, si les installations hydroélectriques fournissant de l'énergie électrique à partir de l'énergie potentielle contenue dans une retenue d'eau (par exemple des barrages sur des fleuves ou des rivières) sont largement répandues, les dispositifs fournissant de l'énergie électrique directement à partir de l'énergie cinétique de courants marins ou fluviaux sont généralement encore actuellement au stade de projets.

Même si les sites qui pourraient être utilisés pour la fourniture d'énergie électrique à partir de courants marins ou fluviaux correspondent généralement à des courants à faibles vitesses, de 0,5 m/s à 6 m/s, la taille des sites et le grand nombre de sites potentiels rendent une telle source d'énergie particulièrement intéressante. En effet, de la rivière jusqu'au grand courant océanique, les surfaces exploitables traversées par un courant varient typiquement de 100 m² à 100 km², ce qui correspond, pour une vitesse de 2 m/s, à des puissances théoriquement récupérables respectivement de 400 kilowatts à 400 gigawatts.

Les dispositifs de récupération et de conversion de l'énergie cinétique de courants marins ou fluviaux comprennent généralement une turbine comprenant un ensemble de pales adaptées à entraîner en rotation un arbre lorsqu'elles sont immergées dans le courant. Parmi les différents types de turbines, on distingue les turbines à flux axial pour lesquelles la direction du courant est parallèle à l'axe de rotation de la turbine et les turbines à flux transverse pour lesquelles la direction du courant est inclinée, et généralement perpendiculaire, à l'axe de rotation de la turbine.

Le fonctionnement de certaines turbines à flux transverse utilise les forces de portance exercées par le courant sur les pales qui ont alors, par exemple, un profil d'aile pour entraîner l'arbre de rotation. Les turbines pour lesquelles l'entraînement en rotation est dû essentiellement aux forces de portance exercées par l'écoulement sur les pales de la turbine sont appelées turbines à portance. C'est le cas notamment de turbines à flux transverse du type Darrieus ou Gorlov ou encore de turbines du type de celles décrites dans la demande de brevet européen EP1718863 déposée au nom de la Demanderesse.

Une caractéristique générale des turbines hydrauliques est la présence d'une force de portance globale perpendiculaire à l'axe de rotation de la turbine et à la direction du courant amont. En effet, la rotation des pales autour de l'axe de rotation de la turbine considérée dans son ensemble, induit un mouvement giratoire du liquide autour de la turbine qui se superpose au mouvement incident perpendiculaire à l'axe de rotation. Il en résulte de façon classique, comme pour un cylindre tournant plongé dans un courant incident perpendiculaire à l'axe du cylindre, une force de portance, appelée force de portance globale, qui s'exerce in fine sur l'axe de rotation de la turbine et qui est donc perpendiculaire à la direction du courant et à l'axe de rotation. La force de portance globale est toujours présente indépendamment de la cause de la rotation de la turbine, c'est-à-dire, dans le cas de certaines turbines à flux transverse, indépendamment du fait que l'entraînement en rotation de l'arbre de la turbine est dû à des forces de portance locale au niveau de chaque pale. Contrairement à ce que l'on observe avec un cylindre en rotation et possédant une surface très régulière, la force de portance globale observée sur une turbine classique tend à varier autour d'une valeur moyenne. Les fluctuations observées autour de cette valeur moyenne se répètent périodiquement sur chaque rotation de 360° de la turbine. Le dispositif de maintien de la turbine et éventuellement le système d'ancrage de la turbine au sol doivent alors être conçus pour résister, en plus de la force de traînée, à la force de portance globale. En outre, la turbomachine dans son ensemble, c'est-à-dire incluant le système de conversion de l'énergie mécanique fournie par l'arbre de la turbine, doit supporter la fatigue produite par les vibrations induites par la force de portance globale variable.

Le problème est accentué lorsque plusieurs turbines sont reliées les unes aux autres pour augmenter les puissances récupérées.

La demande de brevet internationale WO200704581 décrit une turbomachine éolienne comprenant plusieurs éoliennes reliées à un mât. Les éoliennes ne sont pas reliées les unes aux autres et fonctionnent de façon indépendante. Une telle turbomachine n'est pas utilisable pour la réalisation d'une turbomachine hydraulique étant donné que les efforts de portance dans un liquide en mouvement sont nettement plus importants.

### Résumé de l'invention

Un aspect de l'invention vise une turbomachine à flux transverse pour laquelle, en fonctionnement, la force de portance transverse globale appliquée au dispositif de maintien de la turbomachine est sensiblement nulle.

Un mode de réalisation prévoit une turbomachine comprenant au moins des première, deuxième, troisième et quatrième turbines hydrauliques à force de portance et à flux transverse, la première turbine comprenant un premier arbre de rotation, la deuxième turbine comprenant un deuxième arbre de rotation, les première et deuxième turbine étant symétriques l'une de l'autre par rapport à un plan , la troisième turbine comprenant un troisième arbre de rotation relié au premier arbre de rotation par un premier dispositif d'accouplement adapté à compenser les défauts d'alignement spatiaux entre les premier et troisième arbres de rotation, la troisième turbine formant, avec la première turbine, un premier empilement de turbines, la quatrième turbine comprenant un quatrième arbre de rotation relié au premier arbre de rotation par un deuxième dispositif d'accouplement adapté à compenser les défauts d'alignement spatiaux entre les deuxième et quatrième arbres de rotation, les troisième et quatrième turbines étant symétriques l'une de l'autre par rapport audit plan, la quatrième turbine formant, avec la deuxième turbine, un deuxième empilement de turbines. La turbomachine comprend, en outre, un dispositif de maintien des premier et deuxième empilements de turbines comprenant un montant unique symétrique par rapport audit plan ou des montants, chacun desdits montants étant symétrique par rapport audit plan et/ou lesdits montants étant disposés de façon symétrique par rapport audit plan, le dispositif de maintien comprenant, en outre, des premier et deuxième plateaux symétriques par rapport audit plan, au moins en partie perpendiculaires audit plan, et disposés entre les première et troisième turbines et entre les deuxième et quatrième turbines, les premier et deuxième arbres de rotation étant reliés de façon pivotante au premier plateau et les troisième et quatrième arbres de rotation étant reliés de façon pivotante au deuxième plateau. La turbomachine comprend, en outre, un dispositif de commande adapté à maintenir en permanence la symétrie entre les premier et deuxième empilements de turbines par rapport audit plan et à maintenir les vitesses de rotation des premier et deuxième empilements de turbines de valeurs égales et de sens de rotation opposés lorsque les premier et deuxième empilements de turbines sont immergés dans un liquide en mouvement.

Selon un mode de réalisation de la présente invention, au moins un montant symétrique par rapport audit plan s'étend en amont des premier et deuxième empilements de turbines par rapport à la direction d'écoulement du liquide et forme une étrave. La première turbine comprend des premières pales reliées au premier arbre de rotation. La deuxième turbine comprend des deuxièmes pales reliées au deuxième arbre de rotation. La troisième turbine comprend des troisièmes pales reliées au troisième arbre de rotation. La quatrième turbine comprend des quatrièmes pales reliées au quatrième arbre de rotation. Le dispositif de commande est adapté à faire tourner les première, deuxième, troisième et quatrième turbines de façon que les première, deuxième, troisième et quatrième pales remontent l'écoulement dudit liquide lorsqu'elles sont les plus proches dudit plan.

Selon un mode de réalisation de la présente invention, au moins un montant s'étend en aval des premier et deuxième empilements de turbines par rapport à la direction d'écoulement du liquide et forme un empennage.

Selon un mode de réalisation de la présente invention, les premier et deuxième empilements de turbines sont adaptés à entraîner un arbre d'entrée d'un système de récupération d'énergie unique par l'intermédiaire d'un dispositif de transmission ou le premier empilement de turbines est adapté à entraîner un arbre d'entrée d'un premier système de récupération d'énergie, le deuxième empilement de turbines étant adapté à entraîner un arbre d'entrée d'un deuxième système de récupération d'énergie.

Selon un mode de réalisation de la présente invention, la turbomachine comprend au moins deux montants latéraux disposés de façon symétrique par rapport audit plan et formant au moins un divergent selon la direction d'écoulement, les premier et deuxième empilements de turbines étant disposés entre les montants latéraux.

Selon un mode de réalisation de la présente invention, les premier et deuxième plateaux sont adaptés à séparer le liquide en mouvement entre les première et troisième turbines et entre les deuxième et quatrième turbines. Au moins la première turbine comprend des premières pales reliées au premier arbre de rotation. Le dispositif de maintien comprend au moins une portion disposée en vis-à-vis de premières extrémités des premières pales.

Selon un mode de réalisation de la présente invention, la turbomachine comprend un dispositif anti-débris comportant des barres et/ou des lames parallèles reliées à au moins un montant et entourant au moins partiellement les premier et deuxième empilements de turbines.

Selon un mode de réalisation de la présente invention, la turbomachine comprend un système adapté à faire pivoter les premier et deuxième empilements de turbines dans le liquide en mouvement.

Selon un mode de réalisation de la présente invention, au moins la première turbine comprend des premières pales reliées au premier arbre de rotation. Les extrémités des premières pales sont reliées par un premier anneau tournant solidairement avec les premières pales.

Selon un mode de réalisation de la présente invention, la première turbine comprend des premières pales reliées au premier arbre de rotation. La deuxième turbine comprend des deuxièmes pales reliées au deuxième arbre de rotation. La troisième turbine comprend des troisièmes pales reliées au troisième arbre de rotation. La quatrième turbine comprend des quatrièmes pales reliées au quatrième arbre de rotation, les premières pales étant symétriques des deuxièmes pales par rapport audit plan, les troisièmes pales étant symétriques des quatrièmes pales par rapport audit plan. Les premières pales sont, en vue de dessus, décalées angulairement par rapport aux troisièmes pales.

Selon un mode de réalisation de la présente invention, au moins un montant correspond à une cavité creuse, la turbomachine comprenant, en outre, un moyen de remplissage ou de vidange, au moins partiel, de la cavité par du liquide.

Selon un mode de réalisation de la présente invention, au moins l'un des montants latéraux comprend au moins une fente s'étendant selon la direction d'écoulement du liquide.

### Brève description des dessins

Ces objets, caractéristiques et avantages, ainsi que d'autres seront exposés en détail dans la description suivante d'exemples de réalisation particuliers faite à titre non-limitatif en relation avec les figures jointes parmi lesquelles :
la figure 1 est une vue en perspective d'un exemple de réalisation classique, non revendiqué, d'un module turbine ;
la figure 2 est une vue en perspective d'un exemple d'une paire de turbomachines selon l'invention ;
la figure 3 est une vue en perspective d'un exemple de tours jumelles ;
les figures 4 à 6 sont des vues en perspective d'autres exemples de réalisation d'une paire de turbomachines selon l'invention ;
les figures 7 et 8 sont des vues de dessus d'autres exemples de paires de turbomachines ;
les figures 9 et 10 sont des vues schématiques de détail d'exemples de liaison entre deux turbomachines adjacentes ;
la figure 11 est une vue analogue à la figure 2 d'un exemple de réalisation d'une paire de turbomachines comprenant une étrave et un empennage ;
la figure 12 est une vue partielle d'un exemple de réalisation d'une étrave ;
les figures 13 et 14 sont des vues en perspective d'exemples de réalisation de tours jumelles comprenant un dispositif de génération d'électricité ;
les figures 15 et 16 sont des vues schématiques en perspective d'exemples de réalisation d'une paire de turbomachines comprenant un dispositif de réduction des interactions entre modules turbines adjacents d'une même colonne turbine ;
la figure 17 est une vue de détail d'une variante de la paire de turbomachines de la figure 16 ;
la figure 18 est une vue analogue à la figure 2 d'un exemple de réalisation d'une paire de turbomachines comprenant une étrave, un empennage et des montants latéraux ;
les figures 19 et 20 sont des vues schématiques en perspective d'exemples de réalisation de tours jumelles dont les paires de turbomachines comprennent une étrave, un empennage et des montants latéraux ;
les figures 21 à 23 sont des vues schématiques en perspective d'exemples de réalisation de paires de turbomachines comprenant un dispositif anti-débris et régularisant le courant amont et/ou le courant aval à la paire de turbomachines ;
la figure 24 est une vue en perspective d'un exemple de réalisation de tours jumelles comprenant un dispositif d'orientation d'ensemble des tours jumelles par rapport au sol ;
la figure 25 est une vue en perspective de détail d'un exemple de réalisation d'une paire de turbomachines comprenant un dispositif d'évitement de formation de tourbillons de bout d'aile ;
la figure 26 est une vue en perspective d'un exemple de la structure interne d'un montant ; et
la figure 27 est une vue schématique en perspective d'un exemple de réalisation d'une paire de turbomachines comprenant une étrave, un empennage et des montants latéraux munis de fentes.

### Description détaillée

Par souci de clarté, de mêmes éléments ont été désignés par de mêmes références aux différentes figures.

Dans le reste de la description, on appelle module turbine une turbine élémentaire à flux transverse comprenant un arbre de rotation et des moyens adaptés à entraîner l'arbre en rotation lorsque ces moyens sont immergés dans un liquide en mouvement selon une direction approximativement perpendiculaire à l'axe de l'arbre de rotation.

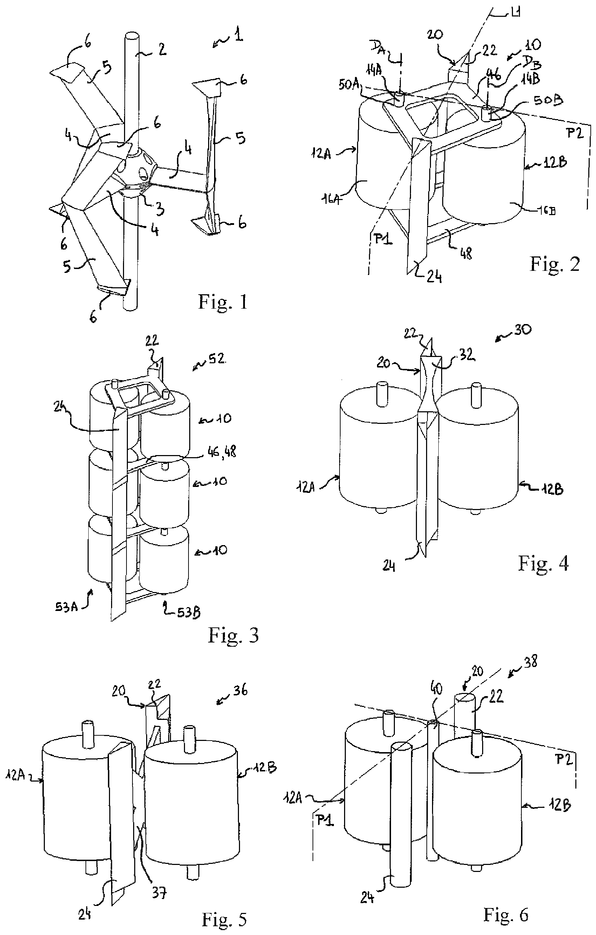

La figure 1 représente un exemple de réalisation d'un module turbine 1 à portance qui correspond à l'un des exemples de réalisation décrit dans la demande de brevet européen EP1718863 déposée au nom de la Demanderesse. A titre d'exemple, le module turbine 1 comprend un arbre de rotation 2 et un moyeu 3 fixé à l'arbre de rotation 2 et duquel se projettent des bras 4. Chaque bras 4 porte une aile 5 (ou pale) à son extrémité opposée au moyeu 3. Chaque aile 5, par exemple en forme de "V", peut comprendre des ailettes marginales 6 aux extrémités.

On appelle colonne turbine un empilement de plusieurs modules turbines dont les arbres de rotation sont reliés les uns aux autres et sensiblement alignés. On appelle tour l'ensemble constitué d'une colonne turbine et du dispositif de maintien de la colonne turbine. On appelle paire de modules turbines, l'ensemble de deux modules turbines adjacents dont les axes de rotation sont sensiblement parallèles et disjoints. On appelle paire de turbomachines l'ensemble formé par une paire de modules turbines et le dispositif de maintien associé.

On appelle L1 une ligne parallèle au vecteur vitesse moyen amont de l'écoulement du liquide auquel est exposé la paire de turbomachines et équidistante des axes de rotation des modules turbines de la paire de turbomachines. On appelle plan P1 le plan contenant la ligne L1 et parallèle aux axes de rotation des modules turbines. Le plan P1 est donc équidistant des axes de rotation des modules turbines de la paire de turbomachines. On appelle plan P2 le plan contenant les axes de rotation des modules turbines de la paire de turbomachines. On appelle paire symétrique de modules turbines la réunion de deux modules turbines respectant la symétrie par rapport au plan P1 appelé alors plan médian de la paire symétrique. On appelle paire symétrique de turbomachines, ou turbomachines jumelles, l'ensemble formé par une paire symétrique de modules turbines et du dispositif de maintien des modules turbines de la paire de modules turbines, le dispositif de maintien étant lui-même symétrique par rapport au plan P1. On appelle paires de tours, l'ensemble constitué de l'empilement de plusieurs paires de turbomachines, les modules turbines des paires de turbomachines étant reliés les uns aux autres pour former deux colonnes turbines. On appelle paire symétrique de tours, ou tours jumelles, l'ensemble constitué de l'empilement de plusieurs paires symétriques de turbomachines.

La présente invention vise une paire symétrique de tours constituée d'un empilement de paires symétriques de turbomachines. Chaque paire symétrique de turbomachines comprend un dispositif de maintien d'au moins une paire de modules turbines à portance et à flux transverse dans laquelle les modules turbines tournent en sens inverse à la même vitesse de rotation. Ceci conduit à annuler, par effet d'addition du bilan des efforts au sein et au niveau du dispositif de maintien des deux forces de portance globales égales et opposées, perpendiculaire à la direction de l'écoulement, qui s'appliquent pourtant sur chacun des deux modules turbines composant cette paire lorsque ces deux modules turbines sont immergés dans un liquide en mouvement.

Plus précisément, pour chaque paire symétrique de turbomachines de la paire symétrique de tours, le dispositif de maintien de la paire de turbomachines comprend, d'une part, un ou plusieurs montants qui sont disposés de façon symétrique par rapport au plan P1 et/ou qui sont eux-mêmes symétriques par rapport au plan P1 et, d'autre part, un ou plusieurs plateaux approximativement perpendiculaires aux axes de rotation des modules turbines, disposés de part et d'autre des modules turbines selon la direction des axes de rotation des modules turbines et portant les liaisons pivots propres à assurer la rotation de chaque module turbine composant la paire de modules turbines.

La présente invention s'applique à tout type de turbine à flux transverse. Plus particulièrement, la présente invention s'applique à des turbines à flux transverse dans lesquelles chaque turbine comprend des pales entraînant en rotation un arbre sous l'action de forces de portance. A titre d'exemple, la présente invention s'applique à des turbines à flux transverse du type Darrieus, du type Gorlov (par exemple, les turbines décrites dans la publication "Helical Turbines for the Gulf Stream: Conceptual Approach to Design of a Large-Scale Floating Power Farm" de Gorlov (Marine Technology, vol. 35, n° 3, Juillet 1998, pages 175-182), etc.) ou à des turbines du type de celles décrites dans la demande de brevet européen EP1718863 déposée au nom de la Demanderesse.

La figure 2 est une vue schématique en perspective d'un exemple de réalisation de turbomachines jumelles selon l'invention utilisées pour réaliser des tours jumelles. La paire symétrique de turbomachines 10 comprend deux modules turbines à flux transverse 12A, 12B. Chaque module turbine 12A, 12B comprend un arbre de rotation 14A, 14B d'axe D_{A}, D_{B} et des moyens d'entraînement 16A, 16B adaptés à entraîner l'arbre 14A, 14B en rotation. Les moyens d'entraînement 16A, 16B sont schématiquement représentés par des cylindres en figure 2. Plus précisément, chaque cylindre représente l'enveloppe contenant les moyens d'entraînement d'un module turbine à flux transverse, l'axe de rotation du module turbine étant confondu avec l'axe de révolution du cylindre. Les axes D_{A} et D_{B} des arbres 14A, 14B sont sensiblement parallèles. La flèche 18 désigne le vecteur vitesse moyen amont de l'écoulement du liquide en mouvement dans lequel sont immergés les modules turbines 12A et 12B. A titre d'exemple, chaque module turbine 12A, 12B peut avoir un diamètre externe de 1 à 10 mètres. Les plans P1, P2 et la ligne L1 ont été représentés par des lignes en traits pointillés. Dans le présent exemple, les modules turbines 12A et 12B sont répartis de façon symétrique par rapport au plan P1.

La paire symétrique de turbomachines 10 comprend un dispositif de maintien 20 des modules turbines 12A et 12B. Le dispositif de maintien 20 se compose de deux montants 22, 24 s'étendant sensiblement parallèlement aux axes D_{A} et D_{B}. Le dispositif de maintien 20 comprend, en outre, deux plateaux 46, 48 sensiblement parallèles ayant chacun la forme d'un losange ajouré en son centre. Chaque plateau 46, 48 est sensiblement perpendiculaire aux axes de rotation D_{A} et D_{B} et est fixé à deux extrémités opposées aux montants 22, 24 et comprend, aux autres extrémités opposées, deux paliers 50A, 50B, dans lesquels les extrémités des arbres 14A, 14B sont montées de façon pivotante de façon à permettre la rotation de chaque module turbine 12A, 12B immergé dans le liquide en mouvement. Les modules turbines 12A, 12B sont ainsi maintenus au sein du dispositif de maintien 20 composé des éléments 22, 24, 46 et 48. Dans le présent exemple de réalisation, le montant 22 est symétrique par rapport au plan P1 et le montant 24 est symétrique par rapport au plan P1. Toutefois, pour que la paire de turbomachines 10 soient qualifiée de symétrique, il n'est pas nécessaire que le montant 22 soit symétrique du montant 24 par rapport au plan P2. Les montants 22 et 24 sont respectivement disposés en amont et en aval du plan P2 par rapport au sens de l'écoulement. Les montants 22, 24 ont une section triangulaire dont la pointe est orientée vers l'amont pour le montant 22 et vers l'aval pour le montant 24.

A titre d'exemple, en vue de dessus, le module turbine 12A tourne dans le sens horaire et le module turbine 12B tourne dans le sens antihoraire. Toutefois, le module turbine 12A pourrait tourner dans le sens antihoraire et le module turbine 12B pourrait tourner dans le sens horaire. Selon les sens de rotation des modules turbines 12A, 12B, les moyens d'entraînement 16A et 16B des modules turbines 12A et 12B remontent ou descendent l'écoulement au niveau du plan médian P1.

Les efforts subis par chaque module turbine 12A, 12B lorsqu'ils sont immergés dans le liquide en mouvement se composent d'un effort de traînée et d'un effort de portance globale à l'échelle de chaque module turbine 12A, 12B. Par symétrie de plan P1 du dispositif de maintien 20 immergé dans le liquide en mouvement, et par symétrie de même plan P1 des modules turbines 12A, 12B (qui tournent en sens opposés), on aboutit à une symétrie de l'écoulement du liquide au sein de la paire symétrique de turbomachines complète 10 composée du dispositif de maintien 20 et de la paire de modules turbines 12A, 12B. La symétrie de l'écoulement du liquide en mouvement ainsi engendré au sein et à l'intérieur de la paire symétrique de turbomachines 10 conduit à deux forces de portance globale instantanées appliquées aux modules turbines 12A, 12B d'intensités égales et de sens opposés suivant une direction perpendiculaire à la direction du liquide en mouvement en amont du dispositif. Transmises au sein des plateaux 46 et 48, les forces de portance globalement appliquées à chaque module turbine 12A, 12B se somment et s'annulent au niveau de la jonction des plateaux 46 et 48 avec les montants 22 et 24.

La figure 3 est une vue en perspective d'un exemple de réalisation de tours jumelles 52 qui correspond à un empilement de plusieurs turbomachines jumelles 10, la liaison entre deux turbomachines jumelles adjacentes étant assurée par les montants 22, 24. Les modules turbines sont reliés les uns aux autres pour former deux colonnes turbines adjacentes 53A, 53B. Plus précisément, les arbres de rotation de deux modules turbines adjacents selon la direction d'empilement sont reliés les uns aux autres.

Pour assurer que les colonnes turbines tournent en sens opposés, et de préférence à la même vitesse de rotation, une possibilité consiste à prévoir un système mécanique, par exemple à engrenages, reliant l'arbre de rotation de la colonne turbine 53A à l'arbre de rotation de la colonne turbine 53B de sorte que les positions angulaires des arbres de rotation des colonnes turbines 53A, 53B sont en permanence liées l'une à l'autre. Une autre possibilité, lorsque chaque colonne turbine 53A, 53B est relié à un générateur qui lui est propre, est de commander la vitesse de rotation de chaque colonne turbine 53A, 53B par l'application d'un couple de freinage par le générateur associé. Les couples de freinages sont alors déterminés pour que les colonnes turbines 53A, 53B tournent en permanence en sens opposés et à la même vitesse de rotation.

La figure 4 est une vue schématique en perspective d'un autre exemple de réalisation de turbomachines jumelles 30 selon l'invention, les plateaux 46, 48 n'étant pas représentés. Par rapport aux turbomachines jumelles 10, les montants 22, 24 sont reliés par un élément 32, jouant à la fois le rôle d'élément d'occultation en empêchant la circulation de fluide entre les deux modules turbines 12A, 12B, et d'élément de renfort en améliorant la rigidité de flexion du dispositif de maintien 20 dans le plan P1 pour une sollicitation de traînée globale de direction L1. Plus précisément, l'élément 32 permet de repousser le premier mode propre de vibration du dispositif de maintien 20. Il permet, en outre, d'éviter que des écoulements parasites provoqués par l'un des modules turbines ne perturbe le fonctionnement de l'autre module turbine. Le dispositif de maintien 20 mis en oeuvre pour la réalisation des turbomachines jumelles 30 peut être composé d'une seule et même pièce mécanique dont la section sera composée de la réunion des sections des éléments 20, 24 et 32.

La figure 5 est une vue schématique en perspective d'un autre exemple de réalisation d'une paire symétrique de turbomachines 36 selon l'invention. Par rapport à la paire symétrique de turbomachines 30, les montants 22, 24 sont reliés par un élément de renfort 37 en forme de croisillon qui améliore la rigidité du dispositif de maintien 20 et qui assure néanmoins une occultation partielle du module turbine 12A par rapport au module turbine 12B.

La figure 6 est une vue schématique en perspective d'un autre exemple de réalisation d'une paire symétrique de turbomachines 38 selon l'invention. Par rapport à la paire symétrique de turbomachines 10, les montants 22, 24 ont une section cylindrique. Le dispositif de maintien 20 comprend, en outre, un montant supplémentaire 40, de section cylindrique, disposé, par exemple, suivant la ligne d'intersection des plans P1 et P2. Un avantage à utiliser des montants de section circulaire par rapport à d'autres formes de sections de montants est la simplicité de fabrication et d'approvisionnement des montants de section circulaire.

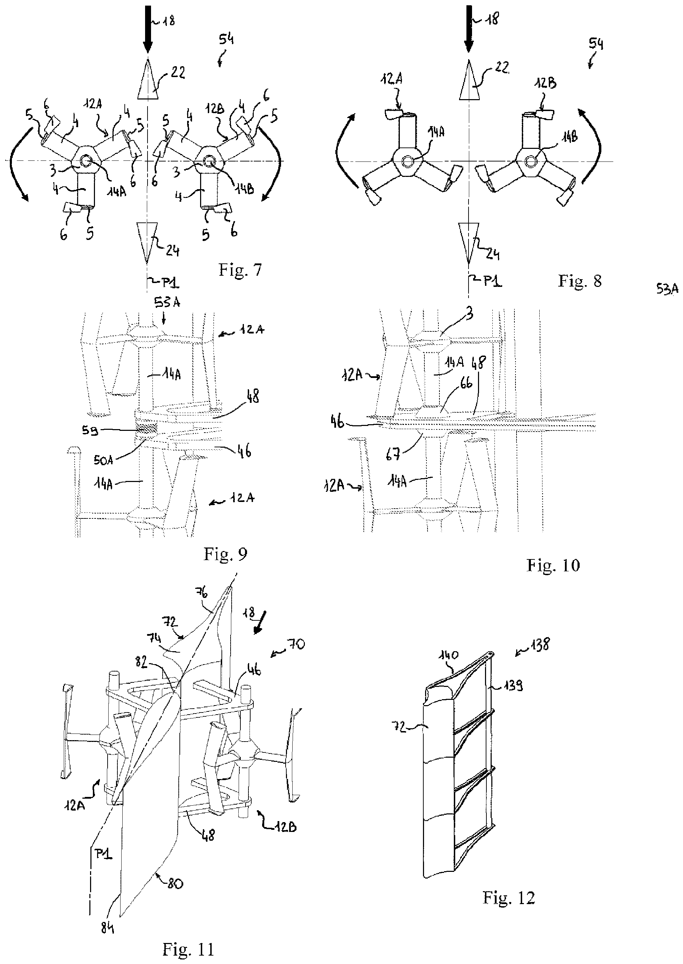

Les figures 7 et 8 sont des vues de dessus de turbomachines jumelles 54 dans le cas où les modules turbines 12A, 12B correspondent au module turbine 1 représenté en figure 1, la référence 2 désignant l'arbre de rotation du module turbine 1 en figure 1 correspondant aux références 14A et 14B sur les autres figures où un module turbine de ce type est représenté. Sur les figures 7 et 8, les modules turbine 12A, 12B sont disposés de façon symétrique par rapport au plan P1. En outre, en figure 7, les modules turbines 12A, 12B sont disposés de façon que le module turbine 12A (à gauche du plan P1) tourne dans le sens antihoraire et le module turbine 12B (à droite du plan P1) tourne dans le sens horaire lorsque l'écoulement a la direction représentée par la flèche 18. En figure 8, les modules turbines 12A, 12B sont disposés de façon que le module turbine 12A (à gauche du plan P1) tourne dans le sens horaire et le module turbine 12B (à droite du plan P1) tourne dans le sens antihoraire lorsque l'écoulement a la direction représentée par la flèche 18. Pour les figures 7 et 8, au cours de la rotation, les modules turbines 12A, 12B continuent à rester sensiblement symétriques l'un par rapport à l'autre par rapport au plan P1.

L'utilisation de systèmes d'accouplement de tronçons d'arbre de modules turbines adjacents d'une même colonne turbine peut être dans certaines conditions requise. La mise en oeuvre de tels accouplements requiert des tours jumelles pour lesquelles chaque module turbine est situé entre deux plateaux 46, 48 qui lui sont associés.

La figure 9 représente un exemple de réalisation d'un système d'accouplement élastique 59 reliant les arbres 14A de deux modules turbines 12A adjacents d'une même colonne turbine 53A. Le système d'accouplement élastique 59 permet de transmettre le couple entre deux modules turbines adjacents d'une même colonne turbine tout en admettant de légers défauts d'alignement. En figure 9, le système d'accouplement élastique 59 est disposé entre les plateaux 46 et 48.

Pour des raisons hydrodynamiques, il peut être avantageux de pouvoir réduire l'écart entre les moyeux 3 de deux modules turbines 12A, 12B adjacents d'une même colonne turbine 53A, 53B.

La figure 10 est une vue en perspective de détail d'un exemple de réalisation de tours jumelles pour lesquelles l'écart entre les moyeux 3 de deux modules turbines adjacents d'une même colonne turbine 53A est réduit par rapport à ce qui est représenté en figure 9. Le système d'accouplement 59 d'arbres de rotation est contenu au sein d'un carter formé de deux coquilles 66, 67, indépendamment fixées à chaque plateau 46, 48. Chaque coquille 66, 67 peut avoir une forme profilée dans le sens de l'écoulement. De façon à ne pas augmenter le degré d'hyperstaticité de l'assemblage, cette variante permet un rapprochement des deux plateaux 46, 48 sans pour autant aboutir à la mise en contact de ceux-ci. Chaque coquille 66, 67 comprend un organe mécanique, de type liaison pivot ou palier, apte à assurer la rotation de l'arbre 14A du module turbine 12A correspondant. Par le placement de joints dynamiques et statiques, il est envisageable d'assurer une étanchéité qui isole le système d'accouplement 59 du contact avec le fluide en mouvement. A titre de variante, les systèmes d'accouplement 59 peuvent comprendre des joints homocinétiques.

La figure 11 est une vue analogue à la figure 2 pour un autre exemple de réalisation de turbomachines jumelles 70. Par rapport à l'exemple de réalisation représenté à la figure 2, les turbomachines jumelles 70 comprennent un montant 72 qui est symétrique par rapport au plan P1 et qui est disposé en amont des modules turbines 12A, 12B par rapport à l'écoulement. Le montant 72 comprend un corps 74 qui se prolonge par une forme relativement pointue 76 orientée vers l'amont. Le montant 72 joue alors le rôle d'une étrave. La forme effilée de l'étrave 72 permet notamment d'éviter que des débris ne s'accumulent contre celle-ci. De plus, la forme de l'étrave 72 permet d'empêcher le décollement de l'écoulement au niveau de l'étrave 72. En outre, le corps 74 assure une protection des modules turbines 12A, 12B au niveau du plan P1. En particulier, lorsque les modules turbines 12A, 12B sont disposés de sorte que les ailes 5 remontent le courant en longeant le plan P1 (configuration inverse de celle représentée en figure 11), l'étrave 72 joue le rôle d'un écran qui masque les ailes lors de cette phase de remontée du courant.

Les turbomachines jumelles 70 comprennent, en outre, un montant 80 qui est symétrique par rapport au plan P1 et qui est disposé en aval des modules turbines 12A, 12B par rapport à l'écoulement. De façon avantageuse, le montant 80 présente une traînée réduite. Le montant 80 a une section en forme de profil d'aile dont le bord d'attaque 82 est orienté vers l'amont et le bord de fuite 84 est orienté vers l'aval. Le montant 80 joue le rôle d'un empennage. Il permet notamment de faciliter l'orientation des turbomachines jumelles 70 dans la direction de l'écoulement comme cela sera décrit par la suite. Il permet également de séparer les sillages des modules turbines 12A, 12B qui pourraient interagir de façon négative.

La figure 12 représente un exemple de réalisation d'un dispositif 138 comprenant un montant avant 139 relié à l'étrave 72 par des longerons 140. Le montant avant 139 peut jouer le rôle d'un dispositif anti-débris. Comme cela sera décrit plus en détail par la suite, un dispositif anti-débris externe peut être fixé au montant avant 139. L'ensemble étrave 72-montant avant 139 de la figure 12 permet de jouer le rôle d'un dispositif anti-débris tout en évitant l'utilisation d'une étrave 72 de grandes dimensions pouvant conduire à des efforts de traînée importants.

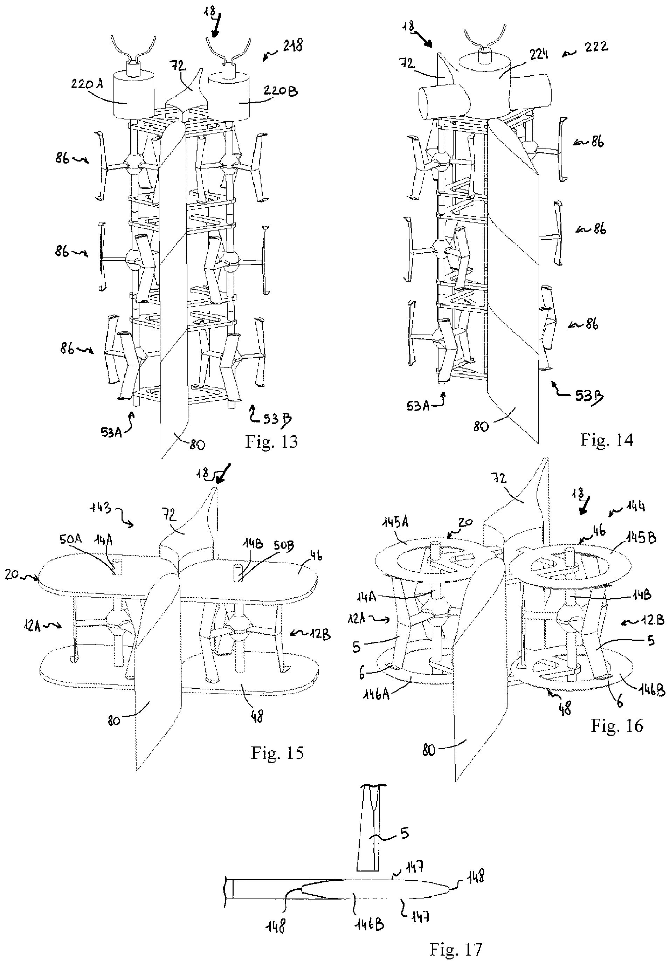

La figure 13 représente un exemple de réalisation de tours jumelles 218 constituées de l'empilement de turbomachines jumelles ayant une structure similaire aux turbomachines jumelles 86 représentées en figure 11 pour lesquelles on a, en outre, représenté deux générateurs électriques 220A, 220B. Le générateur électrique 220A est entraîné par la colonne turbine 53A et le générateur électrique 220B est entraîné par la colonne turbine 53B. Chaque générateur électrique 220A, 220B comprend un système de variation de vitesse adapté à modifier le rapport entre la vitesse de rotation de l'arbre de la colonne turbine associée et la vitesse de rotation de l'arbre d'entrée du générateur électrique associé en fonction de l'écoulement qui atteint la colonne turbine.

La figure 14 représente un exemple de réalisation de tours jumelles 222 ayant une structure analogue aux tours jumelles 218 à la différence qu'elle comprend un générateur électrique 224 unique entraîné par les deux colonnes turbines 53A, 53B. Les extrémités des arbres de rotation des colonnes turbines 53A, 53B sont alors connectées à un système de transmission de puissance, par exemple du type à courroies crantées ou à engrenages, qui entraîne l'arbre d'entrée du générateur électrique 224. Le système de transmission peut, en outre, assurer le maintien en permanence des positions angulaires relatives de la colonne turbine 53A par rapport à la colonne turbine 53B. Le générateur électrique 224 comprend un système de variation de vitesse adapté à modifier le rapport entre les vitesses de rotation des arbres des colonnes turbines 53A, 53B et la vitesse de rotation de l'arbre d'entrée du générateur 224 en fonction de l'écoulement qui atteint les colonnes turbines 53A, 53B.

Les générateurs électriques 220A, 220B et 224 peuvent, en outre, fournir un couple de freinage, qui s'oppose à la rotation des colonnes turbines 53A, 53B, d'amplitude déterminée en fonction de l'écoulement du liquide qui atteint les modules turbines à flux transverse.

Lorsqu'un seul générateur 224 est mis en oeuvre pour la collecte puis la transformation de l'énergie mécanique fournie par chaque colonne turbine 53A, 53B, un système de transmission de puissance du type à engrenages, notamment à engrenages coniques, peut être mis en oeuvre, ce système permettant aussi d'appliquer si nécessaire au bon fonctionnement du générateur 224 un coefficient de multiplication entre la vitesse de rotation des colonnes turbines et la vitesse de rotation de l'arbre mécanique situé en entrée du générateur. Ce système d'engrenages simple peut être avantageusement remplacé par des systèmes de transmission de puissance plus complexes comme, par exemple, des systèmes du type boite de vitesses, de type différentiel. Les systèmes de type différentiel peuvent être particulièrement intéressants lorsque, lors de la mise en oeuvre d'un seul générateur électrique, les deux colonnes turbines fonctionnent de manière légèrement dissymétrique et ont des vitesses de rotation non parfaitement synchronisées.

Dans les exemples de réalisation représentés aux figures 13 et 14, les générateurs électriques 220A, 220B et 224 sont disposés aux sommets des colonnes turbine 53A, 53B. A titre de variante, les générateurs électriques 220A, 220B et 224 peuvent être disposés à la base des colonnes turbine 53A, 53B.

Bien que des exemples de tours jumelles aient été décrits pour la conversion d'énergie cinétique de courants marins ou fluviaux en énergie électrique, il est clair que la présente invention peut s'appliquer à la conversion d'énergie cinétique de courants marins ou fluviaux en d'autres types d'énergie. A titre d'exemple, les turbomachines selon l'invention peuvent être utilisées pour actionner un système de pompage ou un système de production d'hydrogène, etc.

La figure 15 est une vue analogue à la figure 11 de turbomachines jumelles 143 dans laquelle chaque plateau 46, 48 est constitué d'une plaque pleine reliée, dans le présent exemple, à l'étrave 72 et à l'empennage 80 et comprenant les paliers 50A, 50B recevant les arbres de rotation 14A, 14B des modules turbines 12A, 12B. Un tel exemple de réalisation permet d'empêcher complètement les interactions entre deux modules turbines adjacents d'une même colonne turbine.

La figure 16 est une vue analogue à la figure 15 de turbomachines jumelles 144 dans laquelle chaque plateau 46, 48 comprend deux portions annulaires 145A, 145B, 146A, 146B. Chaque portion annulaire est disposée en vis-à-vis des extrémités des ailes 5 des modules turbines 12A, 12B de sorte qu'en rotation, chaque extrémité d'aile, comprenant éventuellement une ailette d'extrémité 6, se déplace en permanence à proximité d'une portion annulaire 145A, 145B, 146A, 146B. Les portions annulaires 145A, 145B, 146A, 146B permettent de réduire les interactions entre deux modules turbines adjacents d'une même colonne turbine et, plus particulièrement, jouent le rôle d'ailettes d'extrémité puisqu'elles favorisent l'interruption des tourbillons de bout d'aile.

La figure 17 est une vue de côté, en coupe partielle, de la portion annulaire 146B. On a également représenté l'extrémité d'une aile 5 du module turbine 12B sans ailette d'extrémité 6. La portion annulaire 146B peut comprendre des faces planes 147, en vis-à-vis des extrémités d'ailes de module turbines, qui se rejoignent par des portions courbes 148. Les portions courbes 148 sont adaptées à réduire la traînée due à la portion annulaire 146B suivant la direction de l'écoulement.

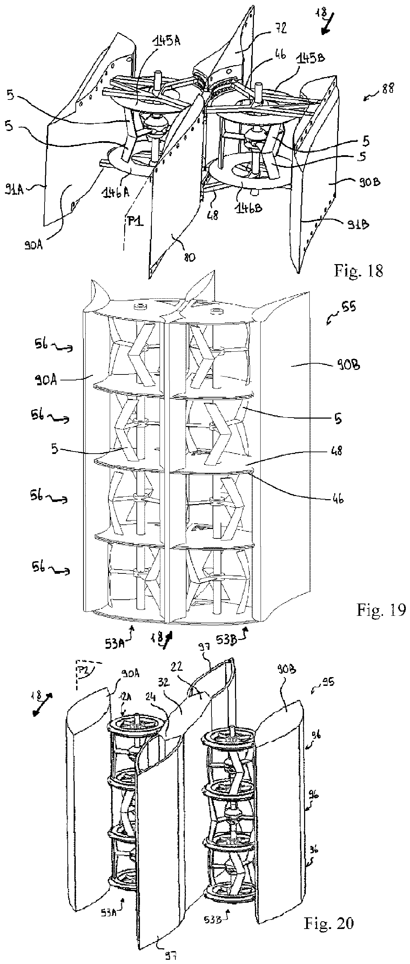

La figure 18 est une vue analogue à la figure 11 de turbomachines jumelles 88 comprenant, en plus de l'étrave 72 et de l'empennage 80, deux montants latéraux 90A, 90B fixés aux plateaux 46, 48. Les montants latéraux 90A, 90B sont disposés de façon symétrique par rapport au plan P1 et favorisent un confinement de l'écoulement au niveau de chaque module turbine 12A, 12B avec l'étrave 72 et l'empennage 80. L'écoulement se trouve confiné jusqu'aux modules turbines 12A, 12B. Au-delà de chaque module turbine 12A, 12B, l'écoulement s'engage dans une partie divergente obtenue grâce à l'éloignement graduel des montants latéraux 90A, 90B par rapport au plan P1 jusqu'à leur bord de fuite 91A, 91B. A titre d'exemple, pour chaque module turbine 12A, 12B, les extrémités des ailes 5 sont en regard de l'une des portions annulaires 145A, 145B, 146A et 146B. Dans cet exemple, pour chaque module turbine 12A, 12B, la partie convergente à l'amont du module turbine 12A, 12B masque partiellement vis-à-vis du flux incident une certaine zone du module turbine 12A, 12B proche du montant latéral 90A, 90B. Pour cette raison, le sens de rotation des modules turbines 12A, 12B peut être inversé par rapport à ce qui est représenté en figure 18.

La figure 19 représente un exemple de réalisation de tours jumelles 55 correspondant à un empilement de turbomachines jumelles 56 similaires aux turbomachines jumelles 88 dans lesquelles les modules turbines correspondent au module turbine 1 représenté en figure 1. Pour les tours jumelles 55, les ailes 5 d'un module turbine 12A, 12B sont décalées angulairement par rapport aux ailes d'un module turbine adjacent de la même colonne turbine 53A, 53B selon la direction d'empilement, par exemple d'un angle de 40°. A titre d'exemple, pour chaque module turbine 12A, 12B, les extrémités des ailes 5 sont en regard de plateaux 46, 48 constitués de plaques pleines comme cela est représenté en figure 15. Les montants 90A, 90B sont tangents aux modules turbines 12A, 12B sans être toutefois symétriques par rapport au plan P2. Les montants latéraux 90A, 90B ne masquent alors pas les modules turbines 12A, 12B. La largeur dégagée par le profil interne du montant 90A, 90B décroît alors brusquement en s'approchant du module turbine 12A, 12B, suivant le sens de l'écoulement interne, près duquel elle garde une valeur constante puis, en aval du module turbine 12A, 12B, la largeur croît graduellement pour former une sorte de divergent. Ces montants latéraux peuvent ainsi avoir la forme d'une aile du type NACA, Eppler, Wortmann, etc., avec éventuellement une forte cambrure. Le fait que les montants 90A, 90B s'éloignent fortement l'un de l'autre en aval des modules turbines 12A, 12B permet d'accroître la section efficace de liquide vue par les turbomachines jumelles 55. Cette configuration, comme celle de la figure 18, est davantage adaptée à un courant à sens unique.

La figure 20 représente un exemple de tours jumelles 95 formées de l'empilement de turbomachines jumelles 96 pour lesquelles les montants 22, 24 et l'élément 32 sont réalisés de façon monobloc, les turbomachines jumelles 96 comprenant, en outre, des montants latéraux 90A, 90B comme pour les turbomachines jumelles 88 représentées en figure 18. En outre, le montant latéral 90A, le montant latéral 90B, le montant 24 sont chacun symétriques par rapport au plan P2. De ce fait, chacune des turbomachines jumelles 96 peut travailler de façon identique pour des sens opposés de courants conservant une direction sensiblement constante (c'est le cas, par exemple, des courants de marée). Dans l'exemple de la figure 20, les montants 22, 24 sont prolongés par des structures vides 97 qui jouent le rôle d'étrave et d'empennage. En outre, les montants latéraux 90A, 90B et l'élément 32 sont sensiblement tangents aux modules turbines 12A, 12B tout en étant symétriques par rapport au plan P2. La largeur dégagée par le profil interne du montant 90A, 90B décroît alors graduellement en s'approchant du module turbine 12A, 12B près duquel elle garde une valeur constante puis, en aval du module turbine 12A, 12B, la largeur croît, comme précisé ci-dessus, pour former une sorte de convergent-divergent régulier.

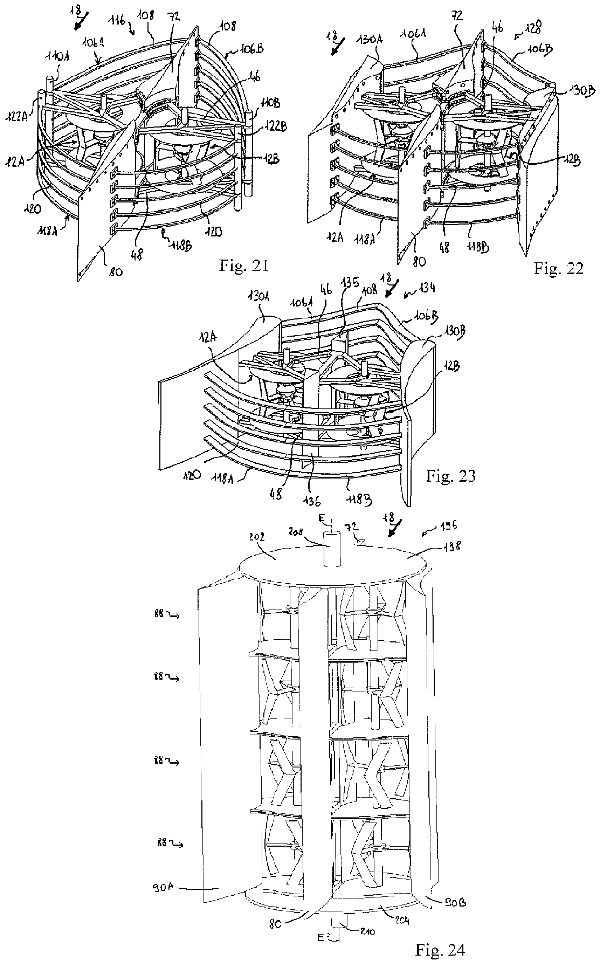

La figure 21 est une vue analogue à la figure 11 de turbomachines jumelles 116 comprenant, en plus de l'étrave 72 et de l'empennage 80, un dispositif anti-débris amont 106A, 106B et un dispositif anti-débris aval 118A, 118B pour chaque module turbine 12A, 12B. Chaque dispositif anti-débris amont 106A, 106B comprend des lames parallèles 108 s'étendant à l'amont d'un module turbine 12A, 12B, une extrémité de chaque lame étant fixée à l'étrave 72 et l'extrémité opposée étant fixée à un montant 110A, 110B, les montants 110A, 110B étant fixés aux plateaux 46, 48. Les lames 108 ont une forme courbe pour faciliter le basculement et le glissement des débris de façon à améliorer l'évacuation des débris. En outre, les lames 108 permettent de régulariser l'écoulement. Des grilles de protection peuvent être fixées aux dispositifs anti-débris amont 106A, 106B pour éviter, par exemple, que des poissons ne viennent au contact des modules turbines 12A, 12B. A titre de variante, les lames 108 peuvent être remplacées par des tubes courbés. Chaque dispositif anti-débris aval 118A, 118B comprend des lames parallèles 120, s'étendant à l'aval d'un module turbine 12A, 12B, une extrémité de chaque lame étant fixée à l'empennage 80 et l'extrémité opposée étant fixée à un montant 122A, 122B, les montants 122A, 122B étant fixés aux plateaux 46, 48. Les dispositifs anti-débris aval 118A, 118B permettent d'éviter que des débris n'atteignent les modules turbines 12A, 12B depuis l'aval, en particulier en cas de faibles courants. Ils permettent également une régularisation de l'écoulement en aval de la paire symétrique de turbomachines 116 ce qui peut être avantageux, en particulier lorsqu'une autre paire symétrique de turbomachines est disposée en aval. En outre, comme cela sera décrit par la suite, on peut prévoir un dispositif permettant de faire tourner l'ensemble de la paire symétrique de turbomachines autour d'un axe parallèle aux axes de rotation D_{A} et D_{B}. Ceci peut être avantageux par exemple pour nettoyer les dispositifs anti-débris amont 106A, 106B directement par l'écoulement en faisant tourner les turbomachines jumelles de plus d'une centaine de degrés. Dans ce cas, les dispositifs anti-débris aval 118A, 118B jouent le rôle des dispositifs anti-débris amont 106A, 106B pendant la phase de nettoyage.

La figure 22 est une vue analogue à la figure 21 de turbomachines jumelles 128 dans laquelle les montants latéraux 110A, 110B, 122A, 122B sont remplacés par des montants 130A, 130B qui ont sensiblement la forme des montants latéraux 90A, 90B de la turbomachine 88 représentée à la figure 18. Par rapport au dispositif anti-débris amont 106A, 106B représenté en figure 21, les dispositifs anti-débris amont 106A, 106B représentés à la figure 22 ont une forme plus pointue au niveau de l'étrave 72. Ceci diminue les risques d'accroché de débris et facilite l'évacuation des débris. A titre de variante, les montants latéraux 130A, 130B peuvent ne pas être reliés directement aux plateaux 46, 48 mais seulement aux dispositifs anti-débris 106A, 106B, 118A, 118B.

La figure 23 est une vue analogue à la figure 21 de turbomachines jumelles 134 dans laquelle l'étrave 72 et l'empennage 80 sont remplacés par des montants 135, 136 ayant la forme des montants 22, 24 des turbomachines jumelles 10 représentées à la figure 2. Les lames 108 des dispositifs anti-débris amont 106A, 106B sont reliées entre elles et sont alors seulement fixées aux montants 130A, 130B à leurs extrémités. De même, les lames 120 des dispositifs anti-débris aval 118A, 118B sont reliées entre elles et sont alors seulement fixées aux montants 130A, 130B à leurs extrémités. A titre de variante, les montants 135, 136 peuvent être absents. La tenue mécanique de la turbomachine est alors assurée par les montants latéraux 130A, 130B. Ceci permet d'utiliser les tours jumelles indépendamment du sens de rotation des modules turbines 12A, 12B. Pour la figure 23, les montants 130A, 130B ne masquent pas les modules turbines 12A, 12B, comme pour la figure 22, et sont disposés de façon que la largeur dégagée par les montants 130A, 130B croît graduellement, en aval du module turbine 12A, 12B, pour former une sorte de divergent. Le fait que les montants 130A, 130B s'éloignent fortement l'un de l'autre en aval des modules turbines 12A, 12B permet d'accroître la section efficace de liquide vue par les turbomachines jumelles 134. Ces montants latéraux peuvent ainsi avoir chacun la forme d'une aile comme cela est représenté en figure 19.

La figure 24 est une vue en perspective d'un exemple de réalisation de tours jumelles 196, correspondant à l'empilement de turbomachines jumelles 88 telles que représentées en figure 19, pour lesquelles on a représenté un dispositif de positionnement 198 des tours. A titre d'exemple, pour chaque paire de turbomachines jumelles constituant les tours jumelles 196, on considère que les plans P1 et P2 sont verticaux. Le dispositif de positionnement 198 comprend une plateforme supérieure 202, ayant la forme d'un disque dans le présent exemple de réalisation, à laquelle est fixé le dispositif de maintien des turbomachines jumelles situées au sommet des tours jumelles. Les tours jumelles 196 comprennent une plateforme inférieure 204, ayant la forme d'un disque dans le présent exemple de réalisation, à laquelle est fixé le dispositif de maintien des turbomachines jumelles situées à la base des tours jumelles. Une portion d'arbre 208 d'axe E se projette depuis la plateforme 202 vers le haut et une portion d'arbre 210 d'axe E' se projette depuis la plateforme 204 vers le bas. La portion d'arbre 210 peut être montée libre en rotation au niveau d'un réceptacle inférieur, non représenté, fixe par rapport au sol. La portion d'arbre 208 peut également être montée libre en rotation au niveau d'un réceptacle supérieur, non représenté, lui-même étant par exemple relié au sol par des poutres ou des câbles non représentés. Les axes E et E' sont confondus de façon à permettre la rotation de l'ensemble des tours jumelles 196 par rapport au sol. A titre de variante, seule la plateforme inférieure 204 peut être présente.

L'entraînement en rotation des tours jumelles 196 peut être réalisé sans assistance motorisée par l'intermédiaire des empennages 80 des turbomachines jumelles qui tendent naturellement à maintenir la ligne L1 parallèle à la direction du courant amont. On peut prévoir ainsi de laisser tourner les tours jumelles 196 pour maintenir la ligne L1 parallèle au courant amont si celui-ci est variable. L'autorotation peut être également assurée en plaçant l'axe de rotation E ou E' en amont des deux résultantes de forces qui s'exercent chacune sur les montants latéraux et qui passent pas leur centres de poussée respectifs. Dans le cas où les turbomachines jumelles formant les tours jumelles sont munies de dispositifs anti-débris amont 106A, 106B, on peut également prévoir de faire tourner les tours jumelles pour faciliter le nettoyage des dispositifs anti-débris amont 106A, 106B.

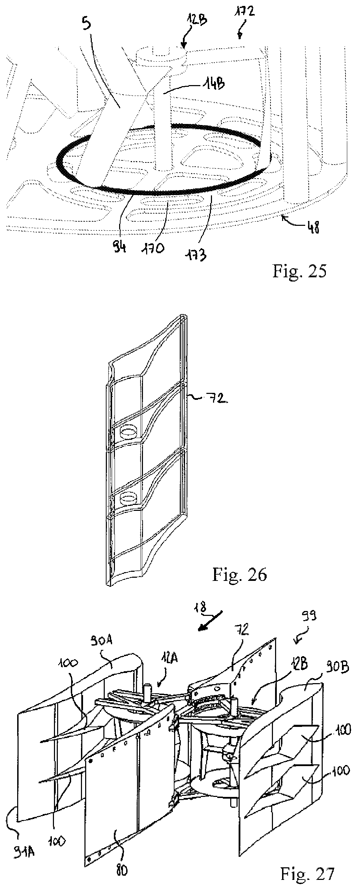

La figure 25 est une vue de détail en perspective d'un exemple de réalisation de turbomachines jumelles 172 munies de plateaux 46, 48 qui ont la même forme que les plateaux représentés en figure 15 à la différence qu'ils peuvent être ajourés. Des ouvertures 170 sont alors réparties, par exemple de façon régulière, sur chaque plateau 46, 48. Les extrémités des ailes 5 situées d'un même côté d'un module turbine peuvent être reliées par un anneau 94, représenté en noir en figure 25. Les anneaux 94 sont disposés en vis-à-vis de certaines des ouvertures 170, ce qui permet de diminuer le frottement hydraulique lors du défilement des anneaux 94 tout en réduisant les interactions entre deux modules turbines adjacents d'une même colonne turbine. Un écart 173 est prévu entre les anneaux 94 des modules turbines 12B et le plateau 48 correspondant. Il peut être avantageux que la section d'un tel anneau 94 soit réduite de sorte que sa largeur excède peu l'épaisseur d'une pale 5. L'anneau 94 est alors dit filaire. Sur un tel anneau filaire, il est également possible de greffer au niveau des seules extrémités des pales 5, des ailettes d'extrémité (winglets) qui constituent ainsi des élargissements locaux de l'anneau filaire initial. Les anneaux 94 permettent d'améliorer la résistance du module turbine 12B à la fatigue due aux efforts de flexion cycliques. De façon générale, des modules turbines 12A, 12B munis d'anneaux 94 peuvent être utilisés avec tout type de plateaux 46, 48, c'est-à-dire des plateaux correspondant à des plaques pleines, éventuellement ajourées, à des plateaux ayant la forme de losanges, à des plateaux comprenant une portion annulaire en vis-à-vis des anneaux 94, etc.

La figure 26 représente un exemple de réalisation de l'étrave 72 dans lequel l'étrave 72 forme un réservoir creux susceptible d'être rempli au moins en partie de liquide. Ceci permet de faciliter le montage/démontage des tours jumelles. La turbomachine comprend alors des moyens actionnables à distance adaptés, lorsque le réservoir est immergé dans le liquide, à remplir au moins partiellement le réservoir avec du liquide et/ou à vider au moins partiellement le réservoir. L'exemple précédent concernant l'étrave 72 creuse peut s'appliquer aux autres types de montants (empennage 80, montants latéraux 90A, 90B, 130A, 130B) décrits précédemment.

Lorsqu'un écoulement incident atteint des turbomachines jumelles, il se divise en écoulements internes, ou axiaux, qui entraînent les modules turbines, et en écoulements externes qui contournent les turbomachines jumelles.

La figure 27 est une vue en perspective schématique d'un autre exemple de réalisation d'une paire symétrique de turbomachines 99 selon l'invention. Par rapport aux turbomachines jumelles 88 représentées en figure 18, les montants latéraux 90A, 90B des turbomachines jumelles 99 sont traversés chacun de fentes 100 de façon à ménager des écoulements transverses entre les écoulements externes à ces montants 90A, 90B et les écoulements internes incidents qui entraînent en rotation chaque module turbine 12A, 12B. Ces écoulements transverses proviennent des écoulements externes et rejoignent les écoulements internes. Ils se forment au travers des fentes 100 à partir de chaque module turbine 12A, 12B et jusqu'aux bords arrière des fentes 100. Il est préférable qu'il n'y ait pas de fente en face des zones du module turbine où se trouvent les systèmes de raccord des pales à l'arbre de rotation du module turbine pour éviter que les écoulements transverses n'augmentent les efforts de traînée sur ces systèmes de raccord. Il peut donc être avantageux de prévoir deux fentes 100 séparant une portion centrale 101 du montant 90B masquant la partie du module turbine 12B où se trouvent les bras 4 du module turbine 12B. Au lieu de deux fentes 100, un nombre pair plus élevé de fentes 100 peut être envisagé.

Ainsi pour chacun des modules turbines 12A, 12B, l'écart de pression décrit ci-dessus se trouve réduit en modifiant l'épaisseur de la fente 100 et les risques de cavitation sont diminués. L'écoulement axial en aval des turbomachines jumelles 99 se trouve régularisé ce qui permet notamment une jonction moins chahutée des écoulements internes et externes en aval des bords de fuite 91A, 91B des montants latéraux 90A, 90B. Enfin, dans la zone des montants 90A, 90B proche de l'écoulement axial où, en l'absence de cette fente 100, les pales 5 transmettent à l'arbre 2 du module turbine 12A, 12B un couple soit faiblement moteur soit résistant, la présence de la fente 100 introduit un écoulement supplémentaire affectant la couche limite interne qui se développe sur les montants latéraux et qui peut engendrer localement un couple moteur et contribuer à améliorer le rendement global du module turbine 12A, 12B.

Lorsque le site marin ou fluvial traversé par un courant est de grandes dimensions, plusieurs tours jumelles peuvent être assemblées pour former une flottille. Une répartition judicieuse des tours jumelles de la flottille permet d'optimiser l'énergie récupérée au niveau de chaque paire symétrique de tours.

Des modes de réalisation particuliers de la présente invention ont été décrits. Diverses variantes et modifications apparaîtront à l'homme de l'art. En particulier, certains aspects décrits précédemment dans des exemples de réalisation particuliers peuvent être combinés à d'autres exemples de réalisation. A titre d'exemple, les plateformes 202, 204 représentées en figure 24 peuvent être prévus au niveau des tours jumelles représentées aux figures 19 et 20. De plus, bien que la présente invention ait été décrite pour des turbomachines jumelles comprenant deux turbines à flux transverse, à axes parallèles disjoints et tournant en sens opposés, il est clair que la présente invention s'applique également à une turbomachine comprenant un nombre pair de turbines à axes parallèles disjoints maintenues par un dispositif de maintien unique, la moitié des turbines tournant dans un sens et l'autre moitié des turbines tournant dans le sens opposé.

## Revendications

1. Turbomachine (52 ; 55) comprenant :
au moins des première, deuxième, troisième et quatrième turbines hydrauliques (12A, 12B) à portance et à flux transverse, la première turbine (12A) comprenant un premier arbre de rotation (14A), la deuxième turbine (12B) comprenant un deuxième arbre de rotation (14B), les première et deuxième turbines étant symétriques l'une de l'autre par rapport à un plan (P1), la troisième turbine comprenant un troisième arbre de rotation relié au premier arbre de rotation par un premier dispositif d'accouplement (59) adapté à compenser les défauts d'alignement spatiaux entre les premier et troisième arbres de rotation, la troisième turbine formant, avec la première turbine, un premier empilement de turbines (53A), la quatrième turbine comprenant un quatrième arbre de rotation relié au deuxième arbre de rotation par un deuxième dispositif d'accouplement (59) adapté à compenser les défauts d'alignement spatiaux entre les deuxième et quatrième arbres de rotation, les troisième et quatrième turbines étant symétriques l'une de l'autre par rapport audit plan, la quatrième turbine formant, avec la deuxième turbine, un deuxième empilement de turbines (53B) ;
un dispositif de maintien (20) des premier et deuxième empilements de turbines comprenant un montant unique symétrique par rapport audit plan (P1) ou des montants (22, 24), chacun desdits montants étant symétrique par rapport audit plan et/ou lesdits montants étant disposés de façon symétrique par rapport audit plan, le dispositif de maintien comprenant, en outre, des premier et deuxième plateaux (46, 48) symétriques par rapport audit plan, au moins en partie perpendiculaires audit plan, et disposés entre les première et troisième turbines et entre les deuxième et quatrième turbines, les premier et deuxième arbres de rotation étant reliés de façon pivotante au premier plateau et les troisième et quatrième arbres de rotation étant reliés de façon pivotante au deuxième plateau ; et
un dispositif de commande (220A, 220B, 224) adapté à maintenir en permanence la symétrie entre les premier et deuxième empilements de turbines par rapport audit plan et à maintenir les vitesses de rotation des premier et deuxième empilements de turbines de valeurs égales et de sens de rotation opposés lorsque les premier et deuxième empilements de turbines sont immergés dans un liquide en mouvement.

2. Turbomachine selon la revendication 1, dans laquelle au moins un montant (72) symétrique par rapport audit plan (P1) s'étend en amont des premier et deuxième empilements de turbines (53A, 53B) par rapport à la direction d'écoulement du liquide et forme une étrave, dans laquelle la première turbine (12A) comprend des premières pales (5) reliées au premier arbre de rotation (14A), dans laquelle la deuxième turbine (12B) comprend des deuxièmes pales (5) reliées au deuxième arbre de rotation (14B), dans laquelle la troisième turbine comprend des troisièmes pales reliées au troisième arbre de rotation, dans laquelle la quatrième turbine comprend des quatrièmes pales reliées au quatrième arbre de rotation, et dans laquelle le dispositif de commande (220A, 220B, 224) est adapté à faire tourner les première, deuxième, troisième et quatrième turbines de façon que les première, deuxième, troisième et quatrième pales remontent l'écoulement dudit liquide lorsqu'elles sont les plus proches dudit plan.

3. Turbomachine selon la revendication 1 ou 2, dans laquelle au moins un montant (80) s'étend en aval des premier et deuxième empilements de turbines par rapport à la direction d'écoulement du liquide et forme un empennage.

4. Turbomachine selon l'une quelconque des revendications 1 à 3, dans laquelle les premier et deuxième empilements de turbines (53A, 53B) sont adaptés à entraîner un arbre d'entrée d'un système de récupération d'énergie unique (224) par l'intermédiaire d'un dispositif de transmission ou dans laquelle le premier empilement de turbines (53A) est adapté à entraîner un arbre d'entrée d'un premier système de récupération d'énergie (220A), le deuxième empilement de turbines (53B) étant adapté à entraîner un arbre d'entrée d'un deuxième système de récupération d'énergie (220B).

5. Turbomachine selon l'une quelconque des revendications 1 à 4, comprenant au moins deux montants latéraux (90A, 90B ; 130A, 130B) disposés de façon symétrique par rapport audit plan (P1) et formant au moins un divergent selon la direction d'écoulement, les premier et deuxième empilements de turbines (53A, 53B) étant disposés entre les montants latéraux.

6. Turbomachine selon l'une quelconque des revendications 1 à 5, dans laquelle les premier et deuxième plateaux (46, 48) sont adaptés à séparer le liquide en mouvement entre les première et troisième turbines (12A) et entre les deuxième et quatrième turbines (12B), dans laquelle au moins la première turbine (12A) comprend des premières pales (5) reliées au premier arbre de rotation (14A) et dans laquelle le dispositif de maintien (20) comprend au moins une portion (145A, 145B) disposée en vis-à-vis de premières extrémités des premières pales (5).

7. Turbomachine selon l'une quelconque des revendications 1 à 6, comprenant un dispositif anti-débris (106A, 106B ; 118A, 118B) comportant des barres et/ou des lames parallèles (108 ; 120) reliées à au moins un montant (72, 80) et entourant au moins partiellement les premier et deuxième empilements de turbines (53A, 53B).

8. Turbomachine selon l'une quelconque des revendications 1 à 7, comprenant un système (198) adapté à faire pivoter ou à laisser pivoter les premier et deuxième empilements de turbines (53A, 53B) dans le liquide en mouvement.

9. Turbomachine selon l'une quelconque des revendications 1 à 8, dans laquelle au moins la première turbine (12A) comprend des premières pales (5) reliées au premier arbre de rotation (14A) et dans laquelle les extrémités des premières pales (5) sont reliées par un premier anneau (94) tournant solidairement avec les premières pales.

10. Turbomachine selon l'une quelconque des revendications 1 à 9, dans laquelle la première turbine (12A) comprend des premières pales (5) reliées au premier arbre de rotation (14A), dans laquelle la deuxième turbine (12B) comprend des deuxièmes pales (5) reliées au deuxième arbre de rotation (14B), dans laquelle la troisième turbine comprend des troisièmes pales reliées au troisième arbre de rotation, dans laquelle la quatrième turbine comprend des quatrièmes pales reliées au quatrième arbre de rotation, les premières pales étant symétriques des deuxièmes pales par rapport audit plan (P1), les troisièmes pales étant symétriques des quatrièmes pales par rapport audit plan (P1), et dans laquelle les premières pales sont, en vue de dessus, décalées angulairement par rapport aux troisièmes pales.

11. Turbomachine selon l'une quelconque des revendications 1 à 10, dans laquelle au moins un montant (72) correspond à une cavité creuse, la turbomachine comprenant, en outre, un moyen de remplissage ou de vidange, au moins partiel, de la cavité par du liquide.

12. Turbomachine selon la revendication 5, dans laquelle au moins l'un des montants latéraux (90A, 90B) comprend au moins une fente (100) s'étendant selon la direction d'écoulement du liquide.

## Patentansprüche

1. Turbinenmotor (52; 55), der Folgendes aufweist:
zumindest erste, zweite, dritte und vierte Querstromwasserturbinen (12A, 12B) des Hubtyps, wobei die erste Turbine (12A) eine erste Drehwelle (14A) aufweist, wobei die zweite Turbine (12B) eine zweite Drehwelle (14B) aufweist, wobei die ersten und zweiten Turbinen symmetrisch zueinander bezüglich einer Ebene (P1) sind, wobei die dritte Turbine eine dritte Drehwelle aufweist, die mit der ersten Drehwelle durch eine erste Kupplungsvorrichtung (59) verbunden ist, welche fähig ist, räumliche Fehlausrichtungen zwischen den ersten und dritten Drehwellen zu kompensieren, wobei die dritte Turbine mit der ersten Turbine einen ersten Turbinenstapel (53A) bildet, wobei die vierte Turbine eine vierte Drehwelle aufweist, die mit der ersten Drehwelle durch eine zweite Kupplungsvorrichtung (59) verbunden ist, welche fähig ist, räumliche Fehlausrichtungen zwischen den zweiten und vierten Drehwellen zu kompensieren, wobei die dritten und vierten Turbinen symmetrisch zueinander bezüglich der Ebene sind, wobei die vierte Turbine mit der zweiten Turbine einen zweiten Turbinenstapel (53B) bildet;
eine Vorrichtung (20) zum Halten der ersten und zweiten Turbinenstapel, welche ein erstes vertikales Glied aufweist, das symmetrisch bezüglich der Ebene (P1) ist, oder vertikale Glieder (22, 24), wobei jedes der vertikalen Glieder symmetrisch bezüglich der Ebene ist, und/oder wobei die vertikalen Glieder symmetrisch bezüglich der Ebene angeordnet sind, wobei die Haltevorrichtung weiter erste und zweite Platten (46, 48) aufweist, die bezüglich der Ebene symmetrisch sind, zumindest teilweise senkrecht zu der Ebene sind und zwischen den ersten und dritten Turbinen und zwischen den zweiten und vierten Turbinen angeordnet sind, wobei die ersten und zweiten Drehwellen schwenkbar mit der ersten Platte verbunden sind, und wobei die dritten und vierten Drehwellen schwenkbar mit der zweiten Platte verbunden sind; und
eine Steuervorrichtung (220A, 220B, 224), welche fähig ist, permanent die Symmetrie zwischen den ersten und zweiten Turbinenstapeln bezüglich der Ebene aufrechtzuerhalten und die Drehzahlen der ersten und zweiten Turbinenstapel auf gleichen Werten und mit entgegengesetzten Drehrichtungen zu halten, wenn die ersten und zweiten Turbinenstapel in einer sich bewegenden Flüssigkeit eingetaucht sind.

2. Turbinenmotor nach Anspruch 1, wobei zumindest ein vertikales Glied (72), das symmetrisch bezüglich der Ebene (P1) ist, sich stromaufwärts der ersten und zweiten Turbinenstapel (53A, 53B) bezüglich der Flussrichtung der Flüssigkeit erstreckt und einen Schaft bildet, wobei die erste Turbine (12A) erste Schaufeln (5) aufweist, die mit der Drehwelle (14A) verbunden sind, wobei die zweite Turbine (12B) zweite Schaufeln (5) aufweist, die mit der zweiten Drehwelle (14B) verbunden sind, wobei die dritte Turbine dritte Schaufeln aufweist, die mit der dritten Drehwelle verbunden sind, wobei die vierte Turbine vierte Schaufeln aufweist, die mit der vierten Drehwelle verbunden sind und wobei die Steuervorrichtung (220A, 220B, 224) fähig ist, die ersten, zweiten, dritten und vierten Turbinen so zu drehen, dass die ersten, zweiten, dritten und vierten Schaufeln den Fluss der Flüssigkeit hinauf gehen, wenn sie am nächsten zur Ebene sind.

3. Turbinenmotor nach Anspruch 1 oder 2, wobei zumindest ein vertikales Glied (80) sich stromabwärts der ersten und zweiten Turbinenstapel bezüglich der Flussrichtung der Flüssigkeit erstreckt und ein Leitwerk bildet.

4. Turbinenmotor nach einem der Ansprüche 1 bis 3, wobei die ersten und zweiten Turbinenstapel (53A, 53B) eine Eingangswelle eines einzelnen Leistungswiedergewinnungssystems (224) über eine Übertragungsvorrichtung antreiben können, oder wobei der erste Turbinenstapel (53A) eine Eingangswelle eines ersten Leistungswiedergewinnungssystems (220A) antreiben kann, wobei der zweite Turbinenstapel (53B) eine Eingangswelle eines zweiten Leistungswiedergewinnungssystems (220B) antreiben kann.

5. Turbinenmotor nach einem der Ansprüche 1 bis 4, der zumindest zwei seitliche vertikale Glieder (90A, 90B; 130A, 130B) aufweist, die symmetrisch bezüglich der Ebene (P1) angeordnet sind, und zumindest einen divergierenden Abschnitt entlang der Flussrichtung bilden, wobei die ersten und zweiten Turbinenstapel (53A, 53B) zwischen den seitlichen vertikalen Gliedern angeordnet sind.

6. Turbinenmotor nach einem der Ansprüche 1 bis 5, wobei die ersten und zweiten Platten (46, 48) die sich bewegende Flüssigkeit zwischen den ersten und dritten Turbinen (12A) und zwischen den zweiten und vierten Turbinen (12B) trennen können, wobei zumindest die erste Turbine (12A) erste Schaufeln (5) aufweist, die mit der ersten Drehwelle (14A) verbunden sind, und wobei die Haltevorrichtung (20) zumindest einen Teil (145A, 145B) aufweist, der vor ersten Spitzen der ersten Schaufeln (5) angeordnet ist.

7. Turbinenmotor nach einem der Ansprüche 1 bis 6, der eine Anti-Verschmutzungsvorrichtung (106A, 106B; 118A, 118B) aufweist, die parallele Stangen und/oder Stäbe (108; 120) aufweist, die mit wenigstens einem vertikalen Glied (72, 80) verbunden sind und zumindest teilweise die ersten und zweiten Turbinenstapel (53A, 53B) umgeben.

8. Turbinenmotor nach einem der Ansprüche 1 bis 7, der ein System (198) aufweist, welches fähig ist, die ersten und zweiten Turbinenstapel (53A, 53B) in der sich bewegenden Flüssigkeit zu schwenken oder schwenken zu lassen.

9. Turbinenmotor nach einem der Ansprüche 1 bis 8, wobei zumindest die erste Turbine (12A) erste Schaufeln (5) aufweist, die mit der ersten Drehwelle (14A) verbunden sind, und wobei die Enden der ersten Schaufeln (5) durch einen ersten Ring (94) verbunden sind, der sich zusammen mit den ersten Schaufeln dreht.

10. Turbinenmotor nach einem der Ansprüche 1 bis 9, wobei die erste Turbine (12A) erste Schaufeln (5) aufweist, die mit der ersten Drehwelle (14A) verbunden sind, wobei die zweite Turbine (12B) zweite Schaufeln (5) aufweist, die mit der zweiten Drehwelle (14B) verbunden sind, wobei die dritte Turbine dritte Schaufeln aufweist, die mit der dritten Drehwelle verbunden sind, wobei die vierte Turbine vierte Schaufeln aufweist, die mit der vierten Drehwelle verbunden sind, wobei die ersten Schaufeln symmetrisch zu den zweiten Schaufeln bezüglich der Ebene (P1) sind, wobei die dritten Schaufeln symmetrisch zu den vierten Schaufeln bezüglich der Ebene (P1) sind, und wobei die ersten Schaufeln in einer Draufsicht in Winkelrichtung bezüglich der dritten Schaufeln versetzt sind.

11. Turbinenmotor nach einem der Ansprüche 1 bis 10, wobei zumindest ein vertikales Glied (72) einem Hohlraum entspricht, wobei der Turbinenmotor weiter Mittel aufweist, um den Hohlraum zumindest teilweise mit Flüssigkeit zu füllen oder zu entleeren.

12. Turbinenmotor nach Anspruch 5, wobei zumindest eines der seitlichen vertikalen Glieder (90A, 90B) zumindest einen Schlitz (100) aufweist, der sich entlang der Flussrichtung der Flüssigkeit erstreckt.

## Claims

1. A turbine engine (52; 55) comprising:
at least first, second, third, and fourth lift-type cross-flow water turbines (12A, 12B), the first turbine (12A) comprising a first rotation shaft (14A), the second turbine (12B) comprising a second rotation shaft (14B), the first and second turbines being symmetrical to each other with respect to a plane (P1), the third turbine comprising a third rotation shaft connected to the first rotation shaft by a first coupling device (59) capable of compensating for spatial misalignments between the first and third rotation shafts, the third turbine forming, with the first turbine, a first stack of turbines (53A), the fourth turbine comprising a fourth rotation shaft connected to the first rotation shaft by a second coupling device (59) capable of compensating for spatial misalignments between the second and fourth rotation shafts, the third and fourth turbines being symmetrical to each other with respect to said plane, the fourth turbine forming, with the second turbine, a second stack of turbines (53B);
a device (20) for holding the first and second turbine stacks, comprising a single vertical member symmetrical with respect to said plane (P1) or vertical members (22, 24), each of said vertical members being symmetrical with respect to said plane and/or said vertical members being arranged symmetrically with respect to said plane, the holding device further comprising first and second plates (46, 48) symmetrical with respect to said plane, at least partly perpendicular to said plane, and arranged between the first and third turbines and between the second and fourth turbines, the first and second rotation shafts being pivotally connected to the first plate and the third and fourth rotation shafts being pivotally connected to the second plate; and
a control device (220A, 220B, 224) capable of permanently maintaining the symmetry between the first and second turbine stacks with respect to said plane and of maintaining the rotation speeds of the first and second turbine stacks of equal values and of opposite rotation directions when the first and second turbine stacks are immersed in a moving liquid.

2. The turbine engine of claim 1, wherein at least one vertical member (72) symmetrical with respect to said plane (P1) extends upstream of the first and second turbine stacks (53A, 53B) with respect to the liquid flow direction and forms a stem, wherein the first turbine (12A) comprises first blades (5) connected to the first rotation shaft (14A), wherein the second turbine (12B) comprises second blades (5) connected to the second rotation shaft (14B), wherein the third turbine comprises third blades connected to the third rotation shaft, wherein the fourth turbine comprises fourth blades connected to the fourth rotation shaft, and wherein the control device (220A, 220B, 224) is capable of rotating the first, second, third, and fourth turbines so that the first, second, third, and fourth blades go up the flow of said liquid when they are closest to said plane.

3. The turbine engine of claim 1 or 2, wherein at least one vertical member (80) extends downstream of the first and second turbine stacks with respect to the liquid flow direction and forms a tail vane.

4. The turbine engine of any of claims 1 to 3, wherein the first and second turbine stacks (53A, 53B) are capable of driving an input shaft of a single power recovery system (224) via a transmission device or wherein the first turbine stack (53A) is capable of driving an input shaft of a first power recovery system (220A), the second turbine stack (53B) being capable of driving an input shaft of a second power recovery system (220B).

5. The turbine engine of any of claims 1 to 4, comprising at least two lateral vertical members (90A, 90B; 130A, 130B) arranged symmetrically with respect to said plane (P1) and forming at least one divergent section along the flow direction, the first and second turbine stacks (53A, 53B) being arranged between the lateral vertical members.

6. The turbine engine of any of claims 1 to 5, wherein the first and second plates (46, 48) are capable of separating the moving liquid between the first and third turbines (12A) and between the second and fourth turbines (12B), wherein at least the first turbine (12A) comprises first blades (5) connected to the first rotation shaft (14A) and wherein the holding device (20) comprises at least one portion (145A, 145B) arranged in front of first tips of the first blades (5).

7. The turbine engine of any of claims 1 to 6, comprising an anti-debris device (106A, 106B; 118A, 118B) comprising parallel bars and/or rods (108; 120) connected to at least one vertical member (72, 80) and at least partially surrounding the first and second turbine stacks (53A, 53B).

8. The turbine engine of any of claims 1 to 7, comprising a system (198) capable of pivoting or of letting pivot the first and second turbine stacks (53A, 53B) in the moving liquid.

9. The turbine engine of any of claims 1 to 8, wherein at least the first turbine (12A) comprises first blades (5) connected to the first rotation shaft (14A) and wherein the ends of the first blades (5) are connected by a first ring (94) rotating along with the first blades.

10. The turbine engine of any of claims 1 to 9, wherein the first turbine (12A) comprises first blades (5) connected to the first rotation shaft (14A), wherein the second turbine (12B) comprises second blades (5) connected to the second rotation shaft (14B), wherein the third turbine comprises third blades connected to the third rotation shaft, wherein the fourth turbine comprises fourth blades connected to the fourth rotation shaft, the first blades being symmetrical to the second blades with respect to said plane (P1), the third blades being symmetrical to the fourth blades with respect to said plane (P1), and wherein the first blades are, in top view, angularly offset with respect to the third blades.

11. The turbine engine of any of claims 1 to 10, wherein at least one vertical member (72) corresponds to a hollow cavity, the turbine engine further comprising means for filling or emptying, at least partially, the cavity with liquid.

12. The turbine engine of claim 5, wherein at least one of the lateral vertical members (90A, 90B) comprises at least one slot (100) extending along the liquid flow direction.
